(19) Europäisches Patentamt
European Patent Office
Office européen des brevets

(11) **EP 2 866 522 A1**

(12) **EUROPEAN PATENT APPLICATION**

(43) Date of publication:
**29.04.2015 Bulletin 2015/18**

(51) Int Cl.:
***H05B 33/08*** (2006.01)

(21) Application number: **14159529.8**

(22) Date of filing: **13.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.09.2013 JP 2013199053**

(71) Applicant: **Toshiba Lighting & Technology Corporation**
**Yokosuka-shi**
**Kanagawa 237-8510 (JP)**

(72) Inventors:
• **Otake, Hirokazu**
  **Kanagawa 237-8510 (JP)**
• **Kitamura, Noriyuki**
  **Kanagawa 237-8510 (JP)**
• **Takahashi, Yuji**
  **Kanagawa 237-8510 (JP)**
• **Akahoshi, Hiroshi**
  **Kanagawa 237-8510 (JP)**

(74) Representative: **Willquist, Sofia Ellinor**
**Awapatent AB**
**Junkersgatan 1**
**582 35 Linköping (SE)**

(54) **Power supply device and luminaire**

(57)     According to one embodiment, a power supply device (3, 22, 29) includes a first inductor (18), a current control section (6) configured to limit a current value of an electric current flowing through the first inductor (18) to a predetermined current value, the current control section (6) including a first switching element (14) of a normally on type and a resistor (15) connected to a main terminal of the first switching element (14), a rectifying element (16) connected to the current control section (6) in series, an electric current flowing to the rectifying element (16) when the current control section (6) is off, and a second inductor (19) magnetically coupled to the first inductor (18). The second inductor is configured to induce a voltage for turning on the current control section (6), when the electric current of the first inductor (18) increases, to induce a voltage for turning off the current control section (6), when the electric current of the first inductor (18) decreases, and to supply the induced voltage to a control terminal of the current control section (6).

FIG. 1

EP 2 866 522 A1

Printed by Jouve, 75001 PARIS (FR)

## Description

FIELD

Embodiments described herein relate generally to a power supply device and a luminaire.

BACKGROUND

In recent years, in a luminaire, as an illumination light source, an incandescent lamp and a fluorescent lamp are replaced with energy-saving and long-life light sources such as a light-emitting diode (LED). For example, new illumination light sources such as an EL (Electro-Luminescence) and an OLED (organic light-emitting diode) are also developed. The brightness of the illumination light sources depends on a value of a flowing electric current. In order to stably light the luminaire, a power supply device that supplies a constant current is necessary. It is necessary to convert a voltage in order to adjust an input power supply voltage to a rated voltage of an illumination light source such as an LED. As a highly efficient power supply suitable for power saving and a reduction in size, there are known switching power supplies such as a DC-DC converter of a chopper system.

As low-loss switching elements used in the switching power supplies, switching elements formed by a compound semiconductor such as GaN and SiC are put to practical use. These elements are a normally on type. It is necessary to perform surer current limitation for the elements.

BRIEF DESCRIPTION OF THE DRAWINGS

FIG. 1 is a circuit diagram illustrating a luminaire including a power supply device according to a first embodiment;
FIGS. 2A to 2D are waveform charts for describing the operation of the power supply device;
FIG. 3 is a characteristic chart showing dependency of an electric current of a switching element on the potential of a control terminal;
FIG. 4 is a circuit diagram illustrating a power supply device according to a second embodiment; and
FIG. 5 is a circuit diagram illustrating a luminaire including a power supply device according to a third embodiment.

DETAILED DESCRIPTION

In general, according to one embodiment, a power supply device includes a first inductor, a current control section, a rectifying element, and a second inductor. The current control section is configured to limit a current value of an electric current flowing through the first inductor to a predetermined current value. The current control section includes a first switching element of a normally on type and a resistor connected to a main terminal of the first switching element. The rectifying element is connected to the current control section in series. An electric current flows to the rectifying element when the current control section is off. The second inductor is magnetically coupled to the first inductor and is configured to induce a voltage for turning on the current control section, when the electric current of the first inductor increases, to induce a voltage for turning off the current control section, when the electric current of the first inductor decreases, and to supply the induced voltage to a control terminal of the current control section.

According to another embodiment, there is provided a luminaire including a power supply device and a lighting load. The power supply device includes a first inductor, a current control section, a rectifying element, and a second inductor. The current control section is a current control section configured to limit a current value of an electric current flowing through the first inductor to a predetermined current value. The current control section includes a first switching element of a normally on type and a resistor connected to a main terminal of the first switching element. The rectifying element is connected to the current control section in series. An electric current flows to the rectifying element when the current control section is off. The second inductor is magnetically coupled to the first inductor. When the electric current of the first inductor increases, the second inductor induces a voltage for turning on the current control section. When the electric current of the first inductor decreases, the second inductor induces a voltage for turning off the current control section. The second inductor supplies the induced voltage to a control terminal of the current control section. The lighting load functions as a load circuit of the power supply device.

Various embodiments will be described hereinafter with reference to the accompanying drawings. In the following explanation, members same as members already described with reference to drawings are denoted by the same reference numerals and signs. Explanation of the members once described is omitted as appropriate.

First Embodiment

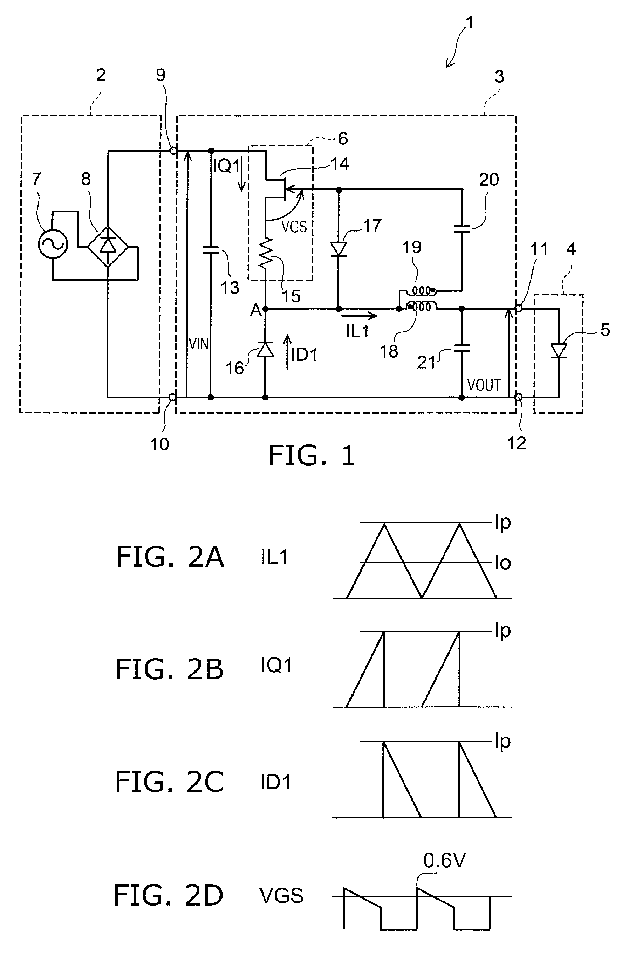

FIG. 1 is a circuit diagram illustrating a luminaire including a power supply device according to a first embodiment. A luminaire 1 includes a power supply device 3 that converts an output voltage VIN of a direct-current voltage source 2 into a voltage VOUT and a lighting load 4 functioning as a load circuit of the power supply device 3. The direct-current voltage source 2 includes, for example, a commercial alternating-current power supply and a bridge-type rectifier circuit. The direct-current voltage source 2 full-wave rectifies an alternating-current voltage of the commercial alternating-current power supply in the bridge-type rectifier circuit and outputs a direct-current voltage. The lighting load 4 includes an illumination light source 5. The illumination light source 5 includes, for example, an LED and is supplied with the voltage VOUT from the power supply device 3 to light.

In the power supply device 3, a current control section 6 and a rectifying element 16 are connected in series between a high-potential input terminal 9 and a low-potential input terminal 10. The current control section 6 includes a first switching element 14 and a resistor 15 connected in series. A drain functioning as a main terminal of the first switching element 14 is connected to the high-potential input terminal 9. A source functioning as a main terminal of the first switching element 14 is connected to one end of the resistor 15. The other end of the resistor 15 is connected to a cathode of the rectifying element 16. An anode of the rectifying element 16 is connected to the low-potential input terminal 10. The first switching element 14 is, for example, a field effect transistor (FET) including a compound semiconductor, is, for example, a high electron mobility transistor (HEMT), and is a normally on type element. The rectifying element 16 is, for example, a silicon diode.

In the power supply device 3, a first inductor 18 is connected between the cathode of the rectifying element 16 and a high-potential output terminal 11. A second inductor 19 is magnetically coupled to the first inductor 18. One end of the second inductor 19 is connected to the cathode of the rectifying element 16. The other end of the second inductor 19 is connected to a gate functioning as a control terminal of the first switching element 14 via a capacitor 20.

An input filter capacitor 13 is connected between the high-potential input terminal 9 and the low-potential input terminal 10. A smoothing capacitor 21 is connected between the high-potential output terminal 11 and a low-potential output terminal 12. The low-potential input terminal 10 and the low-potential output terminal 12 are connected on the inside of the power supply device 3.

In FIG. 1, as the direct-current voltage source 2, a direct-current voltage source is illustrated that rectifies an alternating-current voltage of an alternating-current power supply 7 such as a commercial alternating-current supply with a rectifier 8 such as a bridge-type rectifier circuit and outputs a direct-current voltage.

The operation of the power supply device 3 is described with reference to FIGS. 1 and 2A to 2D.

FIGS. 2A to 2D are waveform charts for describing the operation of the power supply device 3.

FIG. 2A is a waveform chart showing an electric current IL1 of the first inductor 18. FIG. 2B is a waveform chart showing an electric current IQ1 of the first switching element 14. FIG. 2C is a waveform chart of an electric current ID1 of the rectifying element 16. FIG. 2D is a waveform chart showing a gate-to-source voltage VGS of the first switching element 14.

First, the operation of the current control section 6 is described. The current control section 6 includes the first switching element 14 and the resistor 15.

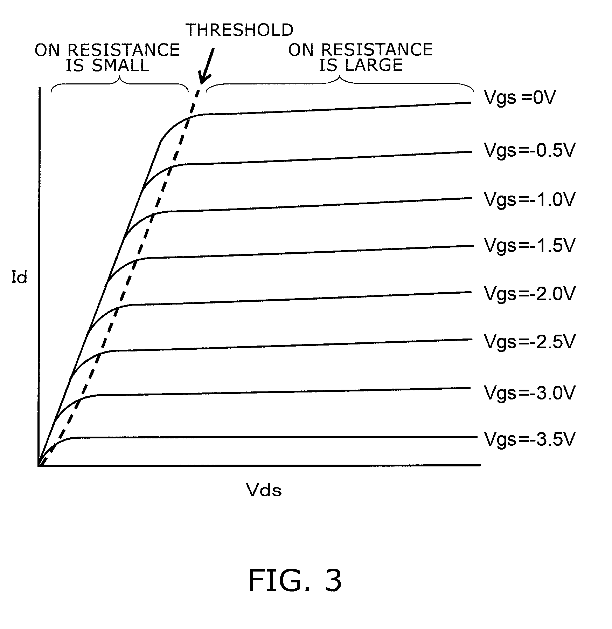

FIG. 3 is a characteristic chart showing dependency of a drain current of the first switching element 14 to the potential of the control terminal. The abscissa of FIG. 3 represents a drain-to-source voltage and the ordinate of FIG. 3 represents a drain current.

As it is evident from FIG. 3, when a drain current Id reaches a predetermined current value, that is, a threshold, ON resistance of the first switching element 14 rises. That is, the first switching element 14 shows a constant current characteristic. The drain current Id in a state in which the first switching element 14 shows the constant current characteristic depends on a gate-to-source voltage Vgs. As an absolute value of the gate-to-source voltage Vgs is larger, a value of the drain current Id in the constant current characteristic is smaller.

The operation of the power supply device 3 is described below with reference to such characteristics of the first switching element 14.

(1) When the power supply voltage VIN is applied to between the high-potential input terminal 9 and the low-potential input terminal 10, since the first switching element 14 is the normally on type element, the first switching element 14 is in an ON state. Then, an electric current flows through a path of the high-potential input terminal 9, the first switching element 14, the resistor 15, the first inductor 18, the smoothing capacitor 21, and the low-potential input terminal 10. The smoothing capacitor 21 is charged. Electromagnetic energy is accumulated in the first inductor 18. Since the first switching element 14 is on, the power supply voltage VIN is substantially applied to both ends of the rectifying element 16. Since a voltage is applied in the opposite direction, the rectifying element 16 changes to a non-conduction state.

(2) As time elapses, an electric current flowing through the first inductor 18 increases. Since the second inductor 19 is magnetically coupled to the first inductor 18, the second inductor 19 induces an electromotive force having polarity for setting the capacitor 20 side to high potential. The capacitor 20 functions as a coupling capacitor. Potential, which is positive with respect to the source, is supplied to a gate of the first switching element 14 via the capacitor 20. The first switching element 14 maintains the ON state. In this embodiment, the potential of the gate of the first switching element 14 based on an A point of FIG. 1 is limited to, for example, 0.6 V according to the action of a diode 17.

(3) According to the increase in the electric current flowing through the first inductor 18, the voltage at both the ends of the resistor 15 also increases. The potential of the gate of the first switching element 14 is limited to, for example, 0.6 V as described above. Therefore, according to the increase in the voltage at both the ends of the resistor 15, the gate-to-source voltage of the first switching element 14 changes to relatively negative potential.

(4) When the electric current flowing through the first inductor 18 exceeds the threshold, the drain-to-source voltage of the first switching element 14 suddenly increases according to the rise in the ON resistance. The increase in the electric current flowing through the first inductor 18 is limited. A counter electromotive force occurs in the first inductor 18. The voltage of the second inductor 19 is reversed. An electromotive force having polarity for setting the capacitor 20 side to low potential is induced. Potential, which is negative with respect to the source, is supplied to the gate of the first switching element 14 via the capacitor 20. The first switching element 14 changes to an OFF state. The threshold of the electric current flowing through the first inductor 18 is represented by Ip in FIGS. 2A to 2C.

(5) A forward voltage is applied by the counter electromotive force of the first inductor 18. Therefore, the rectifying element 16 changes to an ON state. An electric current flows through a path of the rectifying element 16, the first inductor 18, and the smoothing capacitor 21. This state is shown in FIGS. 2B and 2C. Simultaneously with the electric current IQ1 decreasing to zero, the electric current ID1 changes from Ip to 0. Since electromagnetic energy is emitted, the electric current of the first inductor 18 decreases. The negative voltage induced by the second inductor 19 is maintained. The first switching element 14 maintains the OFF state.

(6) When the electromagnetic energy accumulated in the first inductor 18 decreases to zero, the electric current flowing through the first inductor 18 decreases to zero. The direction of the electromotive force induced by the second inductor 19 is reversed again. An electromotive force for setting the capacitor 20 side to high potential is induced. A voltage higher than the voltage of the source is supplied to the gate of the first switching element 14. The first switching element 14 is turned on. Consequently, the power supply device 3 returns to the state of (1).

Thereafter, the power supply device 3 repeats (1) to (6). Switching from ON to OFF of the first switching element 14 is automatically repeated. The voltage of the smoothing capacitor 21 changes to the voltage VOUT stepped down from the power supply voltage VIN. The voltage VOUT is supplied to the illumination light source 5 of the lighting load 4 as an output voltage of the power supply device 3. For example, when the illumination light source 5 is an LED, the voltage is equal to a forward voltage of the LED.

As shown in FIG. 2A, an increasing electric current and a decreasing electric current alternately flow to the first inductor 18. An average Io of the electric currents is an electric current supplied to the illumination light source 5. In the electric current flowing through the first inductor 18, a high-frequency component is bypassed by the smoothing capacitor 21. The average Io is represented as Io=Ip/2. The average Io is a fixed current irrespective of the power supply voltage VIN and a load. That is, a constant current is supplied to the illumination light source 5. The illumination light source 5 can be stably lit.

The resistor 15 configuring the current control unit 6 is selected taken into account the electric current Ip. Among the constant current characteristics shown in FIG. 3, a condition in which a threshold is a current value same as the current Ip is selected. A gate-to-source voltage corresponding to the current value is calculated. When the gate-to-source voltage is represented by Vth, a resistance value R15 of the resistor 15 is calculated as follows:

$$R15 = Vth/Ip$$

The number of turns n2 of the second inductor 19 is determined as described below.

When the first switching element 14 is on, a voltage applied to the first inductor 18 is VIN-VOUT. However, a voltage drop due to the current control section 6 is neglected. When the number of turns of the first inductor 18 is represented as n1 and a voltage induced by the second inductor 19 is represented as Vn2, the voltage Vn2 is calculated as follows:

$$Vn2 = n2 \times (VIN-VOUT)/n1$$

The capacitor 20 is charged through the diode 17 in a direction in which a terminal connected to the second inductor 19 is set on a positive side.

When the first switching element 14 is off, the voltage of the gate of the first switching element 14 is a sum of the voltages of the inductor 19 and the capacitor 20. When the voltage of the gate of the first switching element 14 is represented as Vg, the voltage Vg is calculated as follows:

$$Vg=-2\times Vg=-2\times n2\times(VIN-VOUT)/n1$$

The voltage n2 is determined such that the voltage Vg is larger than the gate-to-source voltage Vth and smaller than a withstand voltage of the gate.

Effects of the first embodiment are described.

In applying the normally on type element to the current control section, a negative power supply for applying a negative voltage to between the gate and source is necessary. In this embodiment, a function equivalent to the negative power supply can be obtained by adding a resistor to a source terminal in series and using a voltage at both ends of the resistor. An effect is obtained that it is possible to simplify a circuit and configure the power supply device with a small number of components.

In this embodiment, two functions, i.e., a function for limiting an electric current and a function for turning on and off an electric current are imparted to the first switching element 14. In this regard, the effect is obtained that it is possible to simplify the circuit.

Second Embodiment

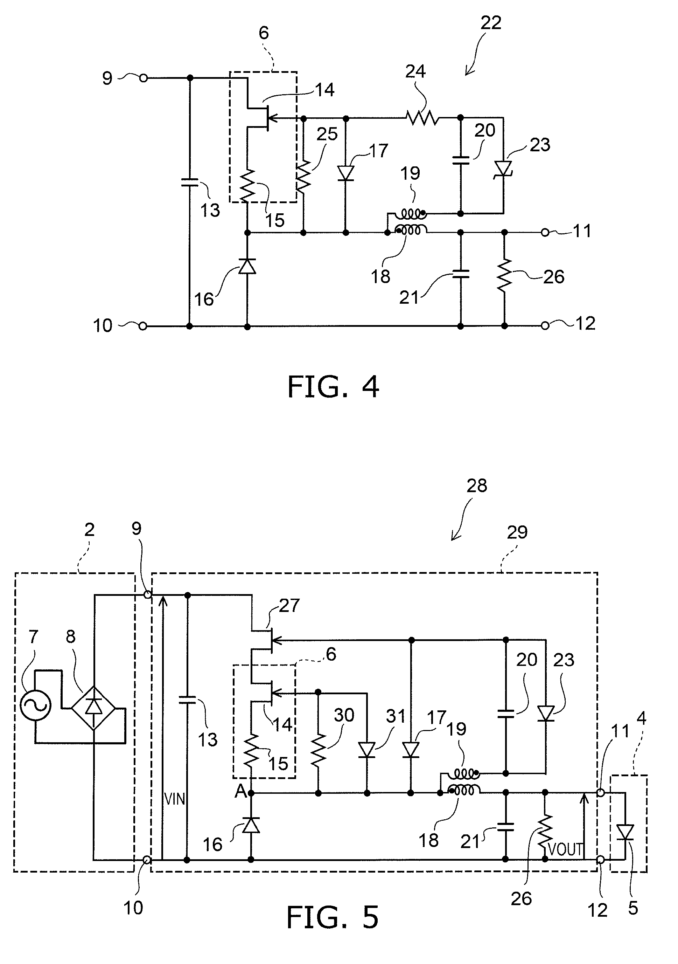

FIG. 4 is a circuit diagram illustrating a power supply device according to a second embodiment.

In a power supply device 22 in this embodiment, a constant voltage diode 23 and resistors 24 to 26 are added to the power supply device 3 in the first embodiment. One end of the capacitor 20 is connected to the second inductor 19. The other end of the capacitor 20 is connected to the gate of the first switching element 14 through the resistor 24. The constant voltage diode 23 is connected to the capacitor 20 in parallel. A cathode terminal of the constant voltage diode 23 is connected to the second inductor 19. An anode terminal of the constant voltage diode 23 is connected to the resistor 24. The resistor 25 is connected to the diode 17 in parallel. The resistor 26 is connected to the smoothing capacitor 21 in parallel. Otherwise, the power supply device 22 can be the same as the power supply device 3 shown in FIG. 1.

The constant voltage diode 23 limits a charging voltage of the capacitor 20. This is for the purpose of reducing a voltage applied to the gate of the first switching element 14 to be equal to or lower than the withstand voltage of the switching element 14. The resistors 24 and 25 divide the voltage of the second inductor 19 and supply the divided voltage to the gate of the first switching element 14. The resistor 26 feeds a fixed load current and stabilizes the operation of the first switching element 14 during a light load. Otherwise, the operation of the power supply device 22 is the same as the operation of the power supply device 3 shown in FIG. 1.

Third Embodiment

FIG. 5 is a circuit diagram illustrating a luminaire including a power supply device according to a third embodiment.

A luminaire 28 includes a power supply device 29 that converts the output voltage VIN of the direct-current voltage source 2 into the voltage VOUT and the lighting load 4 functioning as a load circuit of the power supply device 29. The lighting load 4 includes the illumination light source 5.

In the power supply device 29, a second switching element 27, the current control section 6, and the rectifying element 16 are connected in series between the high-potential input terminal 9 and the low-potential input terminal 10. The current control section 6 includes the first switching element 14 and the resistor 15 connected in series. A drain of the second switching element 27 is connected to the high-potential input terminal 9. A source of the second switching element 27 is connected to a drain of the first switching element 14. A source of the first switching element 14 is connected to one end of the resistor 15. The other end of the resistor 15 is connected to the cathode of the rectifying element 16. The anode of the rectifying element 16 is connected to the low-potential input terminal 10. Like the first switching element 14, the second switching element 27 is, for example, a field effect transistor (FET), is, for example, a high electron mobility transistor (HEMT), and is a normally on type element.

The first inductor 18 is connected between the cathode of the rectifying element 16 and the high-potential output terminal 11. One end of the second inductor 19 magnetically coupled to the first inductor 18 is connected to the cathode of the rectifying element 16. The other end of the second inductor 19 is connected to a gate of the second switching element 27 via the capacitor 20. An anode of the diode 17 is connected to the gate of the second switching element 27. The gate of the first switching element 14 is connected to the cathode of the rectifying element 16 through a resistor 30. A diode 31 is connected to the resistor 30 in parallel. An anode of the diode 31 is connected to the gate of the first switching element 14. A cathode of the diode 31 is connected to the cathode of the rectifying element 16.

The input filter capacitor 13 is connected between the high-potential input terminal 9 and the low-potential input terminal 10. The smoothing capacitor 21 is connected between the high-potential output terminal 11 and the low-potential output terminal 12. The low-potential input terminal 10 and the low-potential output terminal 12 are connected on the inside of the power supply device 3. The resistor 26 is connected to the smoothing capacitor 21 in parallel.

The second switching element 27 turns on and off an electric current of the first inductor 18. The resistor 30 and the diode 31 stabilize the gate potential of the first switching element 14.

The operation of the power supply device 29 is described.

(1a) When the power supply voltage VIN is applied to between the high-potential input terminal 9 and the low-potential input terminal 10, since the first switching element 14 and the second switching element 27 are the normally on type elements, the first switching element 14 and the second switching element 27 are in an ON state. Then, an electric current flows through a path of the high-potential input terminal 9, the second switching element 27, the first switching element 14, the resistor 15, the first inductor 18, the smoothing capacitor 21, and the low-potential input terminal 10. The smoothing capacitor 21 is charged. Electromagnetic energy is accumulated in the first inductor 18. The power supply voltage VIN is substantially applied to both ends of the rectifying element 16. Since a voltage is applied in the opposite direction, the rectifying element 16 changes to a non-conduction state.

(2a) As time elapses, an electric current flowing through the first inductor 18 increases. Since the second inductor 19 is magnetically coupled to the first inductor 18, the second inductor 19 induces an electromotive force having polarity for setting the capacitor 20 side to high potential. The capacitor 20 functions as a coupling capacitor. Potential, which is positive with respect to the source, is supplied to a gate of the second switching element 27 via the capacitor 20. The second switching element 27 maintains the ON state. In this embodiment, a voltage between an A point in FIG. 5 and the gate of the second switching element 27 is limited to, for example, 0.6 V according to the action of the diode 17.

(3a) According to the increase in the electric current flowing through the first inductor 18, the voltage at both the ends of the resistor 15 also increases. The voltage between the A point in FIG. 5 and the gate of the second switching element 27 is limited to, for example, 0.6 V as described above. Therefore, according to the increase in the voltage at both the ends of the resistor 15, the gate-to-source voltage of the second switching element 27 changes to relatively negative potential.

(4a) When the electric current flowing through the first inductor 18 exceeds the threshold described above with reference to FIG. 3, the drain-to-source voltage of the first switching element 14 suddenly increases according to the rise in the ON resistance. The gate-to-source voltage of the second switching element 27 changes to a negative large value. The second switching element 27 changes to an OFF state. An electric current at this point is represented by Ip as in the circuit shown in FIG. 1.

(5a) A forward voltage is applied by the counter electromotive force of the first inductor 18. Therefore, the rectifying element 16 changes to an ON state. An electric current flows through a path of the rectifying element 16, the first inductor 18, and the smoothing capacitor 21. Since electromagnetic energy is emitted, the electric current of the first inductor 18 decreases. The negative voltage induced by the second inductor 19 is maintained. The second switching element 27 maintains the OFF state.

(6a) When the electromagnetic energy accumulated in the first inductor 18 decreases to zero, the electric current flowing through the first inductor 18 decreases to zero. The direction of the electromotive force induced by the second inductor 19 is reversed again. An electromotive force for setting the capacitor 20 side to high potential is induced. A voltage higher than the voltage of the source is supplied to the gate of the second switching element 27. The second switching element 27 is turned on. Consequently, the power supply device 29 returns to the state of (1a).

Thereafter, the power supply device 29 repeats (1a) to (6a). Switching from ON to OFF of the second switching element 27 is automatically repeated. The voltage VOUT stepped down from the power supply voltage VIN is supplied to the illumination light source 5. As in the embodiment shown in FIG. 1, a limited current is supplied to the illumination light source 5. It is possible to stably light the illumination light source 5.

Effects of the second embodiment are described.

In this embodiment, as in the first embodiment, the resistor is added to the source terminal of the normally on type element in series to configure the current control section. Therefore, an effect is obtained that it is possible to simplify a circuit and configure the power supply device with a small number of components.

In this embodiment, the two normally on type elements, that is, the first switching element 14 and the second switching element 27 are used. A withstand voltage equal to or higher than the power supply voltage VIN is necessary for the second switching element 27. As a withstand voltage of the first switching element 14, a value exceeding the gate-to-source voltage of the second switching element 27 is sufficient. That is, a low-withstand voltage element can be used as the first switching element 14. In general, since the low-withstand voltage element operates at high speed, an increase in the ON resistance at the time when a flowing electric current reaches the threshold is steep. An OFF operation of the second switching element 27 is performed at high speed. Therefore, an effect is also obtained that it is possible to reduce a loss of the second switching element 27 and save power consumption.

The embodiments are described above with reference to the specific examples. However, the embodiments are not limited to the specific examples and various modifications of the embodiments are possible.

For example, the first switching element 14 and the second switching element 27 are not limited to the GaN-based HEMT. For example, the first switching element 14 and the second switching element 27 may be a semiconductor element formed by using a semiconductor having a wide band gap (a wide band gap semiconductor) such as silicon carbide (SiC), gallium nitride (GaN), or diamond as a semiconductor substrate. The wide band gap semiconductor means a semiconductor having a band gap wide than a band gap of gallium arsenide (GaAs) having the band gap of about 1.4 eV. The wide band gap semiconductor includes, for example, a semiconductor having a band gap equal to or wider than 1.5 eV, gallium phosphate (GaP having band gap of about 2.3 eV), gallium nitride (GaN having a band gap of about 3.4 eV), diamond (C having a band gap of about 5.27 eV), aluminum nitride (AlN having a band gap of about 5.9 eV), and silicon carbide (SiC).

The lighting load 4 is not limited to LED and may be, for example, an organic EL (Electro-Luminescence) or an OLED (Organic light-emitting diode). A plurality of the illumination light sources 5 may be connected to the lighting load 4 in series or in parallel.

The embodiments are described above with reference to the specific examples. However, the embodiments are not limited to the specific examples. That is, examples obtained by those skilled in the art applying design changes to the specific examples are also included in the scope of the embodiments as long as the examples include the characteristics of the embodiments. The components and the arrangement, the materials, the conditions, the shapes, the sizes, and the like of the components included in the specific examples are not limited to those illustrated in the figures and can be changed as appropriate.

The components included in the embodiments can be combined as long as the combination is technically possible. Components obtained by combining the components are also included in the scope of the embodiments as long as the components include the characteristics of the embodiments. Besides, in the category of the idea of the embodiments, those skilled in the art can conceive various modifications and alterations. It is understood that the modifications and the alternations also belong to the scope of the embodiments.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power supply device (3, 22, 29) comprising:

   a first inductor (18);
   a current control section (6) configured to limit a current value of an electric current flowing through the first inductor (18) to a predetermined current value, the current control section (6) including a first switching element (14) of a normally on type and a resistor (15) connected to a main terminal of the first switching element (14);
   a rectifying element (16) connected to the current control section (6) in series, an electric current flowing to the rectifying element (16) when the current control section (6) is off; and
   a second inductor (19) magnetically coupled to the first inductor (18) and configured to induce a voltage for turning on the current control section (6), when the electric current of the first inductor (18) increases, to induce a voltage for turning off the current control section (6), when the electric current of the first inductor (18) decreases, and to supply the induced voltage to a control terminal of the current control section (6).

2. The device (3, 22, 29) according to claim 1, wherein
   the first switching element (14) supplies an electric current to the first inductor (18) when the first switching element (14) is on, and

the second inductor (19) induces a voltage for turning on the first switching element (14), when the electric current of the first inductor (18) increases, induces a voltage for turning off the first switching element (14), when the electric current of the first inductor (18) decreases, and supplies the induced voltage to a control terminal of the first switching element (14).

3. The device (29) according to claim 1, further comprising a second switching element (27) configured to supply an electric current to the first inductor (18) when the second switching element (27) is on,

the rectifying element (16) being connected to one of the current control section (6) and the second switching element (27) in series and feeding an electric current when the second switching element (27) is off, and

the second inductor (19) inducing a voltage for turning on the second switching element (27), when the electric current of the first inductor (18) increases, inducing a voltage for turning off the second switching element (27), when the electric current of the first inductor (18) decreases, and supplying the induced voltage to a control terminal of the second switching element (27).

4. A luminaire (1, 28) comprising:

the power supply device (3, 22, 29) according to any one of claims 1 to 3; and
a lighting load (4) functioning as a load circuit of the power supply device (3, 22, 29).

FIG. 1

FIG. 2A    IL1

FIG. 2B    IQ1

FIG. 2C    ID1

FIG. 2D    VGS

FIG. 3

FIG. 4

FIG. 5

Europäisches
Patentamt
European
Patent Office
Office européen
des brevets

## EUROPEAN SEARCH REPORT

Application Number

EP 14 15 9529

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 595 452 A1 (TOSHIBA LIGHTING & TECHNOLOGY [JP]) 22 May 2013 (2013-05-22) * paragraphs [0039], [0041]; figure 3 * | 1-4 | INV. H05B33/08 |
| X | EP 2 590 479 A1 (TOSHIBA LIGHTING & TECHNOLOGY [JP]) 8 May 2013 (2013-05-08) * figure 9 * | 1-4 | |
| X | US 2009/108769 A1 (ISHIKITA TORU [JP] ET AL) 30 April 2009 (2009-04-30) * figure 1 * | 1-4 | |
| X | JP 2004 119078 A (TOSHIBA LIGHTING & TECHNOLOGY) 15 April 2004 (2004-04-15) * figures 1-4 * | 1-4 | |
| Y | EP 2 573 919 A2 (TOSHIBA LIGHTING & TECHNOLOGY [JP]) 27 March 2013 (2013-03-27) * figure 1 * | 1-4 | |
| Y | WO 2013/042265 A1 (TOSHIBA LIGHTING & TECHNOLOGY [JP]; KITAMURA NORIYUKI [JP]; TAKAHASHI) 28 March 2013 (2013-03-28) * figure 3 * | 1-4 | **TECHNICAL FIELDS SEARCHED (IPC)** H05B |

The present search report has been drawn up for all claims

| Place of search | Date of completion of the search | Examiner |
|---|---|---|
| Munich | 20 March 2015 | Müller, Uta |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 14 15 9529

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2015

| Patent document cited in search report | | Publication date | Patent family member(s) | | Publication date |
|---|---|---|---|---|---|
| EP 2595452 | A1 | 22-05-2013 | CN | 203057001 U | 10-07-2013 |
| | | | EP | 2595452 A1 | 22-05-2013 |
| | | | JP | 2013106469 A | 30-05-2013 |
| | | | US | 2013119860 A1 | 16-05-2013 |
| EP 2590479 | A1 | 08-05-2013 | CN | 103096572 A | 08-05-2013 |
| | | | EP | 2590479 A1 | 08-05-2013 |
| | | | KR | 20130049711 A | 14-05-2013 |
| | | | TW | 201320823 A | 16-05-2013 |
| | | | US | 2013113387 A1 | 09-05-2013 |
| US 2009108769 | A1 | 30-04-2009 | DE | 102008052701 A1 | 30-07-2009 |
| | | | US | 2009108769 A1 | 30-04-2009 |
| JP 2004119078 | A | 15-04-2004 | JP | 4123886 B2 | 23-07-2008 |
| | | | JP | 2004119078 A | 15-04-2004 |
| EP 2573919 | A2 | 27-03-2013 | CN | 103023332 A | 03-04-2013 |
| | | | EP | 2573919 A2 | 27-03-2013 |
| | | | JP | 2013070456 A | 18-04-2013 |
| | | | US | 2013069548 A1 | 21-03-2013 |
| WO 2013042265 | A1 | 28-03-2013 | CN | 103828209 A | 28-05-2014 |
| | | | EP | 2760117 A1 | 30-07-2014 |
| | | | JP | 5660351 B2 | 28-01-2015 |
| | | | US | 2014197753 A1 | 17-07-2014 |
| | | | WO | 2013042265 A1 | 28-03-2013 |

EPO FORM P0459

For more details about this annex : see Official Journal of the European Patent Office, No. 12/82